# EUROPÄISCHE PATENTSCHRIFT

(11) **EP 2 742 559 B1**
(45) Veröffentlichungstag und Bekanntmachung des Hinweises auf die Patenterteilung: **30.09.2015**
(21) Anmeldenummer: 12759640.1
(22) Anmeldetag: 10.08.2012
(51) Int. Cl.: H01M 10/54, B07B 4/08, C22B 26/12, H01M 10/052

(54) **VERFAHREN ZUM WIEDERGEWINNEN VON AKTIVMATERIAL AUS EINER GALVANISCHEN ZELLE UND AKTIVMATERIAL-SEPARATIONSANLAGE, INSBESONDERE AKTIVMETALL-SEPARATIONSANLAGE**
METHOD FOR RECLAIMING ACTIVE MATERIAL FROM A GALVANIC CELL, AND AN ACTIVE MATERIAL SEPARATION INSTALLATION, PARTICULARLY AN ACTIVE METAL SEPARATION INSTALLATION
PROCÉDÉ DE RÉCUPÉRATION DE MATIÈRE ACTIVE À PARTIR D'UNE CELLULE GALVANIQUE ET INSTALLATION DE SÉPARATION DE MATIÈRE ACTIVE, EN PARTICULIER INSTALLATION DE SÉPARATION DE MÉTAL ACTIF

(30) Priorität: 12.08.2011 DE 102011110083
(43) Veröffentlichungstag der Anmeldung: 18.06.2014
(73) Patentinhaber: Technische Universität Braunschweig Carolo-Wilhelmina, 38106 Braunschweig (DE)
(72) Erfinder: HANISCH, Christian, 38118 Braunschweig (DE); HASELRIEDER, Wolfgang, 38118 Braunschweig (DE); KWADE, Arno, 38176 Wendeburg (DE)
(74) Vertreter: Plöger, Jan Manfred
(86) Internationale Anmeldenummer: PCT/DE2012/000811
(87) Internationale Veröffentlichungsnummer: WO 2013/023640

(56) Entgegenhaltungen:
- EP-A1- 1 215 742
- DE-A1- 19 842 658
- DE-U1- 29 803 442
- CHRISTIAN HANISCH ET AL: "Recovery of Active Materials from Spent Lithium-Ion Electrodes", GLOCALIZED SOLUTIONS FOR SUSTAINABILITY IN MANUFACTURING-PROCEEDINGS OF THE 18TH CIRP INTERNATIONAL CONFERENCE ON LIFE CYCLE ENGINEERING; PROCEEDINGS OF THE 18TH CIRP INTERNATIONAL CONFERENCE ON LIFE CYCLE ENGINEERING, SPRINGER, BERLIN, DE; TECHNISCH, 1. Januar 2011 (2011-01-01), Seiten 85-89, XP008158000, DOI: 10.1007/978-3-642-19692-8_15 ISBN: 978-3-642-19691-1
- KRUEGER S ET AL: "Recycling Of Lithium-Ion Batteries", 18TH INTERNATIONAL CONFERENCE ON SOLID STATE IONICS (SSI-18), WARSAW UNIVERSITY OF TECHNOLOGY, WARSZAWA, POLAND, 1. Januar 2011 (2011-01-01), XP008158002,

## Beschreibung

Die Erfindung betrifft ein Verfahren zum Wiedergewinnen von Aktivmaterial, insbesondere von Lithium oder Lithiumverbindungen, aus einer galvanischen Zelle, die ein Aktivmaterial, einen Träger für das Aktivmaterial, einen Binder zum Verbinden des Aktivmaterials und des Trägers und gegebenenfalls einen Elektrolyten umfasst, mit den Schritten: (a) Zerkleinern der Zellen, insbesondere unter Inertgas, so dass zumindest auch feste Zellenfragmente entstehen, (b) Erwärmen der festen Zellenfragmente auf eine Zersetzungs-Temperatur, die so hoch gewählt ist, dass der Binder sich zersetzt und/oder verdampft, so dass wärmebehandelte Zellenfragmente entstehen, und (c) Klassieren der wärmebehandelten Zellenfragmente.

Gemäß einem zweiten Aspekt betrifft die Erfindung eine Aktivmetall-Separationsanlage, die ausgebildet ist zum Wiedergewinnen von Aktivmaterial, insbesondere Lithium, einer galvanischen Zelle, die ein Aktivmaterial, einen Träger für das Aktivmaterial, einen Binder zum Verbinden des Aktivmaterials und des Trägers und einen Elektrolyten umfasst, mit (a) einer Zellenzerkleinerungsvorrichtung zum Zerkleinern der Zellen, wobei die Zellenzerkleinerungsvorrichtung gasdicht ist und eine Inertgas-Zuführvorrichtung umfasst, so dass die Zellen unter Inertgas zu Zellenfragmenten zerkleinerbar sind, und (b) einem Ofen, der zumindest mittelbar mit der Zellenzerkleinerungsvorrichtung verbunden und eingerichtet ist zum Erwärmen der Zellenfragmente auf eine Zersetzungstemperatur, die so hoch gewählt ist, dass der Binder sich zersetzt.

Beim Recycling von Aktivmaterial, insbesondere von Lithium aus Lithium-Akkumulatoren oder Batterien, besteht das Problem, dass die chemischen Prozesse relativ aufwendig sind. Der Grund dafür ist, dass die Trennung des Aktivmaterials von seinem Träger nur unzureichend gelingt.

Aus der US 2005/0241943 A1 ist ein Verfahren bekannt, bei dem die Zellen zunächst zerkleinert und dann einer Wärmebehandlung unterzogen werden. Danach werden die Zellen geschreddert und auf die Zersetzungs-temperatur erwärmt. Anschließend werden die wärmebehandelten Zellenfragmente durch Vibrationssieben getrennt. Es hat sich jedoch gezeigt, dass dieses Verfahren aufwendig ist. Der Erfindung liegt die Aufgabe zugrunde, das Wiedergewinnen von Aktivmaterial, insbesondere von Lithium oder Lithiumverbindungen, aus alten Batterien oder Akkumulatoren zu verbessern.

Aus der DE 199 54 998 A1 ist eine Schneidmühle bekannt, bei der das von einem Schneidrotor geschnittene Gut kontinuierlich so durch ein Sieb, insbesondere ein Luftstrahlsieb, gefördert wird, das nur diejenigen Partikel die Vorrichtung verlassen können, die eine vorgegebene Größe unterschreiten.

Aus der DE 29 803 442 U1 ist ein Luftstrahlsieb für die Analyse bekannt, mit dem eine hohe Zahl an Analysen in kurzer Zeit durchführbar ist und das zu diesem Zweck mehrere gegeneinander abgetrennte Siebflächen aufweist. Dieses Luftsieb wird zur Bestimmung von Korngrößenverteilungen im Feinkornbereich eingesetzt.

Aus der AT 386 769 B ist eine Luftstrahl-Mehrdeck-Siebmaschine bekannt, mittels der trockene, rieseiförmige Schuttgüter kleiner Korngröße in bis zu 25 Fraktionen in einem Arbeitsgang klassifiziert werden können.

Aus der DE 19842658 A1 ist ein Verfahren zum Behandeln von Abfallbatterien bekannt.

Die Erfindung löst das Problem durch ein gattungsgemäßes Verfahren, bei dem das Klassieren ein Luftstrahlsieben umfasst. Gemäß einem zweiten Aspekt löst die Erfindung das Problem durch eine Aktivmetall-Separationsanlage, die eine Luftstrahlsiebvorrichtung besitzt, die zumindest unmittelbar mit dem Ofen verbunden und eingerichtet ist zum Klassieren von Aktivmaterial und Träger, insbesondere Trägerfolie.

Vorteilhaft an der Erfindung ist, dass das Aktivmaterial in hoher Reinheit gewonnen werden kann. Der Grund dafür ist, dass beim Luftstrahlsieben sehr kleine Maschenweiten einsetzbar sind, so dass auch kleine Verunreinigungspartikel ferngehalten werden.

Vorteilhafterweise kann auch das Trägermaterial in hoher Reinheit zurückgewonnen werden kann. Beispielsweise wird als Träger häufig Aluminiumfolie verwendet, die nur dann effizient recycelt werden kann, wenn sie gewisse Mindestanforderungen hinsichtlich der Reinheit erfüllt. Beispielsweise eignet sich eine Trägerfolie mit mehr als 0,03 % Verunreinigungen nur wenig zum Recyceln. In der weiteren hydrometallurgischen Aufarbeitung neigen Übergangsmetallsalzlösungen aus einer sauren Lithiumlösung zur Agglomeration, wenn diese die bei der konventionellen Trennung üblichen ca. 1 Massen-% Aluminiumkontamination enthalten. Dieser Aspekt liegt darin begründet, dass sich Aluminiumhydroxid-Komplexe bilden, welche die Agglomerate fest verbinden. Diese festen Agglomerate lassen sich in einem herkömmlichen Prozess nicht vollständig vermahlen, was zu einem Materialverlust führt. Entsprechend hergestellte Aluminium-kontaminierte Übergangsmetallsalzlösungen müssten so vor der Vermahlung kostenintensiv aufgereinigt werden. Bei einer Reduktion des Aluminiumsgehalts auf unter 0,1 % ist dieser Effekt nicht mehr zu beobachten. Mit dem erreichten Resultat einer Al-Kontamination von nur 0,05-0,06 Massen-% lassen sich die Materialien demnach ökologisch und ökonomisch vorteilhaft recyceln. Dadurch, dass beim Aufprall auf das Sieb beim Luftstrahlsieben Aktivmaterial abgeklopft wird, lassen sich sehr hohe Reinheiten für den Träger, insbesondere die Trägerfolie, erreichen.

Der Erfindung liegt die Erkenntnis zugrunde, dass das Erwärmen der Zellenfragmente auf die Zersetzungstemperatur zwar theoretisch ausreichen müsste, um den Binder so weit zu zerstören, dass das Aktivmaterial freigesetzt wird, dass aber dennoch das Aktivmaterial nur schwer vom Träger zu lösen ist. Aufgrund welchen Effekts das Aktivmaterial auch ohne Binder am Träger anhaftet, ist bislang noch ungeklärt.

Beim Luftstrahlsieben kommt es zu einem heftigen Aufprall des Trägers mit noch anhaftendem Aktivmaterial auf das Sieb. Dieser Aufprall löst noch anhaftendes Aktivmaterial ab, so dass es wiedergewonnen werden kann.

Wegen des Aufpralls des Trägers auf dem Sieb und den dadurch herbeigeführten Trenneffekt kann das Luftstrahlsieben auch als Prallseparieren bezeichnet werden. Analog kann die Luftstrahlsiebvorrichtung auch als Prallsepariervorrichtung und das Luftstrahlsieb auch als Prallseparator bezeichnet werden.

Erfindungsgemäß ist damit auch eine Aktivmaterial-Separationsanlage, die eine Prallseparationsvorrichtung, die zumindest mittelbar mit dem Ofen verbunden und eingerichtet ist zum Klassieren von Aktivmaterial und Träger, indem das Luftstrahlsieben so durchgeführt wird, dass das Aktivmaterial zumindest auch durch einen Aufprall auf ein Sieb der Prallseparationsvorrichtung und/oder auf eine Prallplatte von dem Träger getrennt wird.

Das Luftstrahlsieben ist bekannt als Laborverfahren zum Trennen von kleinen Partikeln von anderen kleinen Partikeln. Die wärmebehandelten Zellenfragmente haben jedoch einen um Größenordnungen größeren Durchmesser als die Partikel des Aktivmaterials, so dass die Fähigkeit des Luftstrahlsiebens zur Trennung von zwei Arten von Partikeln mit jeweils kleinen Durchmessern für das erfindungsgemäße Verfahren irrelevant ist. Im erfindungsgemäßen Verfahren wird das Luftstrahlsieben auch als zusätzlicher Trennschritt eingesetzt.

Im Rahmen der vorliegenden Beschreibung wird unter dem Zerkleinern der Zellen insbesondere ein Zerschneiden, Zerschlagen, Zerhäckseln oder Zerdrücken verstanden. Das kann bei Temperaturen zwischen -195,79 °C -100 °C erfolgen, so dass nur geringe Anforderungen hinsichtlich des Temperaturregimes bestehen.

Unter dem Erwärmen der festen Zellenfragmente wird insbesondere ein Erwärmen in einem gasdichten Behälter verstanden, so dass beispielsweise Sauerstoff am Zutritt gehindert wird. Insbesondere erfolgt das Erwärmen unter Inertgas oder im Vakuum.

Unter dem Aktivmaterial wird insbesondere eine Verbindung verstanden, welche Lithiumionen reversibel aufnehmen und abgeben kann. Auf der Kathodenseite beispielsweise Lithiumnickelmangankobaltoxid, Lithiumnickelaluminiumoxid und Lithiumeisenphosphat, auf der Anodenseite beispielsweise Graphit.

Unter dem Träger für das Aktivmaterial wird insbesondere eine Trägerfolie verstanden, auf der das Aktivmaterial in Form von Partikeln aufgebracht ist. Beispielsweise handelt es sich bei der Trägerfolie um Aluminiumfolie. Bei dem Binder handelt es sich beispielsweise um Polyvenylidenfluorid (PVDF).

Das Zerkleinern der Zellen und/oder das Erwärmen der festen Zellenfragmente erfolgt bevorzugt unter Inertgas, beispielsweise unter Stickstoff. Günstig ist es, wenn das Zerkleinern der Zellen unter Umgebungstemperatur, insbesondere unter bei höchstens 30°, erfolgt, wobei es vorteilhaft sein kann, wenn die Zerkleinerungsvorrichtung, mit der die Zellern zerkleinert werden, gekühlt wird, so dass der Wärmeeinfluss auf die Zellen gering bleibt.

Das erfindungsgemäße Verfahren wird vorzugsweise als kontinuierlicher Prozess durchgeführt, also nicht chargenweise.

Vorzugsweise beträgt der Durchsatz mehr als 100 Tonnen pro Jahr. Das Luftstrahlsieben wird bislang im Labormaßstab eingesetzt, wo es zur chargenweisen Bearbeitung von Proben genutzt wird. Diese Proben sind zudem sehr klein. Der Einsatz des Luftstrahlsiebens in einem Massenverfahren ist bislang unbekannt.

Gemäß einer bevorzugten Ausführungsform werden galvanischen Zellen verwendet, deren Aktivmaterial aus Partikeln gebildet ist, wobei die Partikel eine Partikeldurchmesserverteilung haben und wobei diese Partikeldurchmesserverteilung einen 90%-Durchmesser besitzt, der demjenigen Durchmesser entspricht, der größer ist als der Durchmesser von 90 % aller Partikel und der kleiner ist als der Durchmesser von 10 % aller Partikel, wobei das Luftstrahlsieben mit einem Sieb erfolgt, dessen Maschenweite maximal dem 200-fachen des 90 %-Durchmessers entspricht. Der angegebene Partikeldurchmesser ist derjenige, der durch Siebung erhalten wird.

Vorzugsweise beträgt die Maschenweite des Siebs höchstens 250 µm, insbesondere höchstens 100 µm. Moderne Lithium-Ionen-Batterien besitzen ein Aktivmaterial, das aus Partikeln mit einem Durchmesser von weniger als 200 µm aufgebaut ist. Bei klassischen Siebverfahren, beispielsweise dem Vibrationssieben, muss eine deutlich größere Maschenweite gewählt werden, damit nicht die Siebzeit so groß wird, dass das Verfahren unwirtschaftlich wird. Eine größere Maschenweite jedoch hat zur Folge, dass mehr Schmutzpartikel durch das Sieb gelangen, so dass die Reinheit des gewonnen Aktivmaterials sinkt.

Vorzugsweise umfassen die galvanischen Zellen je zumindest eine Anode und zumindest eine Kathode, wobei die Anoden und Kathoden gemeinsam erwärmt und die entstehenden wärmebehandelten Zellenfragmente in einem gemeinsamen Luftstrahlsieb klassiert werden. Unter dem Merkmal, dass die Anoden und die Kathoden gemeinsam erwärmt werden, wird verstanden, dass ein Gemisch aus beiden in ein und derselben Vorrichtung erwärmt wird. Das ist möglich, da das Luftstrahlsieben zu einer hinreichend sortenreinen Trennung von Stromsammlerfolie und Beschichtungspartikeln führt.

Vorzugsweise umfasst das Verfahren den Schritt, dass vor dem Erwärmen der Zellenfragmente auf die Zersetzungstemperatur die Zellenfragmente bei einer Trocknungs-Temperatur getrocknet werden, so dass trockene Zellenfragmente und Trocknungsdämpfe entstehen, wobei zumindest ein Teil der Trocknungsdämpfe kondensiert wird. Das hat den Vorteil, dass das Elektrolytlöschungsmittel zurückgewonnen werden kann. Es ist dabei vorteilhaft, wenn die Trocknungs-Temperatur unter 100 °C liegt, insbesondere unter 80 °C.

Vorzugsweise wird das Erwärmen der Zellenfragmente auf die Zersetzungs-Temperatur unter Inertgas oder im Vakuum durchgeführt. Das hat den Vorteil, dass Kupfer dann nicht oxidiert, so dass sowohl die Anode als auch die Kathode gemeinsam verarbeitet werden können. Das wiederum führt zu einem besonders einfachen Trennverfahren, das dennoch hoch sortenreine Recyclingprodukte zur Verfügung stellt. Unter Inertgas wird ein Gas oder Gasgemisch verstanden, das unter den vorliegenden Umgebungsbedingungen weder mit Kupfer noch mit Aluminium (Stromsammelfolien) reagiert. Das Kupfer kann so als wertvolle Komponente in hoher Reinheit zurückgewonnen werden.

Vorzugsweise umfasst das Verfahren den Schritt eines Behandelns der trockenen Zellfragmente mittels Magnetabscheider, so dass eisenfreie Zellenfragmente entstehen. Günstig ist es, wenn diese eisenfreien Zellenfragmente gesichtet werden, beispielsweise durch einen Zickzacksichter. Die eisenfreien Zellenfragmente werden dann auf die Zersetzungs-Temperatur des Binders erhitzt.

Die Zersetzungs-Temperatur beträgt vorzugsweise zumindest 350 °C und höchstens 800 °C. Es hat sich herausgestellt, dass bei diesen Temperaturren der Binder sicher zersetzt wird.

Vorzugweise wird beim Zerkleinern der Zellen unter Inertgas zumindest auch das Elektrolytmittel abgezogen. Das steigert die Recyclingquote.

Gemäß einer bevorzugten Ausführungsform wird das Zerkleinern der Zellen so durchgeführt, dass der Median der längsten Durchmesser der resultierenden Folienfragmente 200 µm nicht unterschreitet. Gemäß einer bevorzugten Ausführungsform wird das Zerkleinern der Zellen so durchgeführt, dass die Folienfragmente zu zumindest 80% einen Durchmesser von über 200 µm haben, wobei der Durchmesser durch Siebung bestimmt wird.

Gemäß einer bevorzugten Ausführungsform erfolgt das Luftstrahlsieben so, dass ein Luftdurchsatz von mindestens 250 Kubikmeter Luft pro Stunden und Quadratmeter Siebfläche erreicht wird, insbesondere mindestens 500 Kubikmeter Luft pro Stunden und Quadratmeter Siebfläche-Besonders günstig sind mindestens 750 Kubikmeter Luft pro Stunden und Quadratmeter Siebfläche. Es ergibt sich dann eine so hohe Partikelgeschwindigkeit, dass der Aufprall zu einem hohen Separationsgrad führt.

Vorzugsweise ist hinter dem Luftstrahlsieb ein Zyklon angeordnet. Günstig ist es zudem, wenn die Trägerluft hinter dem Luftstrahlsieb abgesaugt wird.

Für einen möglichst geringen Energieverbrauch ist es günstig, wenn das Sieb zumindest weitgehend vollflächig mit dem partikelhaltigen Luftstrom beaufschlagt wird.

Die Aktivmaterial-Separationsanlage besitzt vorzugsweise einen Vortrockner, der im Materialfluss hinter der Zellenzerkleinerungsvorrichtung und vor dem Ofen angeordnet ist. Der Vortrockner ist eingerichtet, um die Zellenfragmente auf die Trocknungs-Temperatur zu erwärmen.

Vorzugsweise umfasst die Aktivmaterial-Separationsanlage zudem einen Magnetabscheider im Materialfluss hinter dem Vortrockner und vor dem Ofen.

Günstig ist es, wenn die Aktivmaterial-Separationsanlage einen Rührreaktor zur Leitsalzrückgewinnung aufweist, der mit der Zellenzerkleinerungsvorrichtung verbunden ist und aus der Zellenzerkleinerungsvorrichtung zumindest einen Teil der Flüssigfraktion abzieht.

Unter dem Verfahren zum Wiedergewinnen von Aktivmaterial der galvanischen Zelle wird insbesondere auch ein Verfahren verstanden, bei dem Elektroden aus der Elektrodenproduktion bearbeitet werden, ohne dass die Elektroden in eine galvanische Zelle eingebaut worden sind, jedoch in eine galvanische Zelle eingebaut werden könnten. In anderen Worten kann es sich bei dem Verfahren auch um ein Verfahren zum In-Prozess-Recycling handeln.

Gemäß einer bevorzugten Ausführungsform ist bezüglich eines Luft- und Zellfragmentstroms hinter dem Sieb eine Prallplatte angeordnet. Diese führt dazu, dass sich die Partikel aus Aktivmaterial, die nur eine schwache Kollision mit dem Sieb hatten, beim Aufprall auf die Prallplatte vom Träger lösen, was die Trennwirkung erhöht.

Gemäß einer bevorzugten Ausführungsform umfasst die Zellenzerkleinerungsvorrichtung zumindest eine Prallmühle. Durch die Vielzahl an Zusammenprallvorgängen in der Prallmühle wird die Bindung zwischen Aktivmaterial und Träger gelockert. Vorzugsweise umfasst die Zellenzerkleinerungsvorrichtung zudem zumindest einen Schredder und/oder eine Zerschneidvorrichtung, die besonders günstig in Materialflussrichtung vor der Prallmühle angeordnet ist.

Erfindungsgemäß ist zudem die Verwendung eines Luftstrahlsiebs in einem Verfahren, insbesondere einem kontinuierlichen Verfahren, zum Wiedergewinnen von Aktivmaterial, insbesondere von Lithium und/oder Lithiumverbindungen, beispielsweise aus gebrauchten Batterien und/oder Akkumulatoren sowie aus Ausschuss bei der Produktion von Batterien und/oder Akkumulatoren.

Im Folgenden wird die Erfindung anhand der beigefügten Zeichnungen näher erläutert. Dabei zeigt
- Figur 1: ein Flussdiagramm einer erfindungsgemäßen Aktivmaterial-Separationsanlage zum Durchführen eines erfindungsgemäßen Verfahrens und
- Figur 2: eine Explosionszeichnung einer Ausführungsform eines Prallseparators der Aktivmaterial-Separationsanlage nach Figur 1.

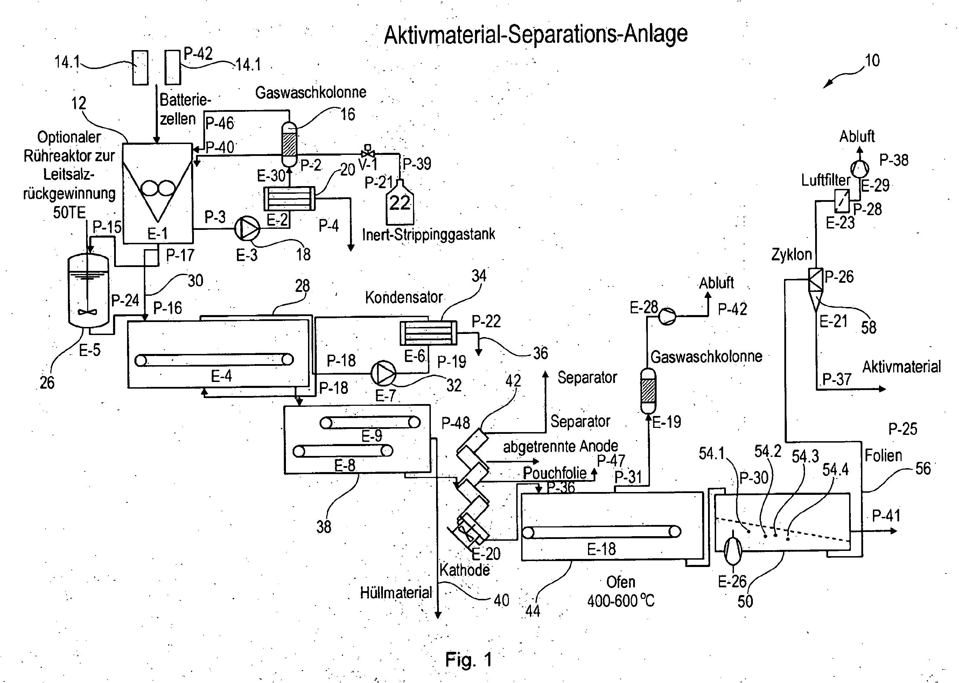

Figur 1 zeigt ein Flussdiagramm einer erfindungsgemäßen Aktivmaterial-Separationsanlage 10, die eine Zellenzerkleinerungsvorrichtung 12 besitzt, der galvanische Zellen 14.1, 14.2, ... zugeführt werden. Die Zellenzerkleinerungsvorrichtung 12 ist gasdicht und umfasst eine Gaswaschkolonne 16, eine Umwälzpumpe 18 und einen Kondensator 20, mittels denen ein Inertgas, beispielsweise Stickstoff, umgewälzt und gereinigt wird. Die Zellenzerkleinerungsvorrichtung umfasst zudem einen Inertgastank 22 zum Einstellen eines Inertgasdrucks in der Zellenzerkleinerungsvorrichtung 12. Der Kondensator 20 besitzt einen Elektrolytabzug 24, über den kondensierter Elektrolyt abgezogen werden kann.

In Materialstromrichtung hinter der Zellenzerkleinerungsvorrichtung 12 kann ein Rührreaktor 26 angeordnet sein, der zum Abziehen einer Flüssigfraktion aus der Zellenzerkleinerungsvorrichtung 12 und zum Rühren derselben angeordnet ist, so dass Leitsalz aus den galvanischen Zellen 14 (Bezugszeichen ohne Zählsuffix bezeichnen das Objekt als solches) zurückgewonnen werden kann.

In Materialflussrichtung hinter der Zellenzerkleinerungsvorrichtung 12 ist ein Vortrockner 28 angeordnet, der über eine Leitung 30 mit der Zellenzerkleinerungsvorrichtung 12 verbunden ist. Beim Zerkleinern der galvanischen Zellen 14 entstandene Zellenfragmente gelangen durch die Leitung 30 in den Vortrockner 28. Dort herrscht eine Trocken-Temperatur Tₜ von vorzugsweise Tₜ = 80 °C. Der Vortrockner 28 umfasst eine Umwälzpumpe 32 und einen Kondensator 34 zum Abkondensieren von Elektrolyt, der über eine Leitung 36 abgezogen werden kann. Der Vortrockner 28 ist gasdicht ausgebildet und wird mit Inertgas durch die Umwälzpumpe 32 gespült.

In Materialstromrichtung hinter dem Vortrockner 28 ist ein Abscheider 38 angeordnet, der einen Magnetabscheider und gegebenenfalls zusätzlich einen Wirbelstromabscheider umfasst. Das magnetische Material wird über eine Ableitung 40 abgezogen. Das nicht magnetische Material gelangt in einen Sichter 42, beispielsweise einen Zickzacksichter. Der Sichter 42 ist wie der Abscheider 38 optional und besonders dann vorteilhaft, wenn wie im vorliegenden Fall nur die Kathode der galvanischen Zellen weiterverwendet werden soll. Die Anoden werden ebenso wie gegebenenfalls vorliegende Pouchfolien abgezogen.

In Materialflussrichtung hinter dem Sichter 42 ist ein Ofen 44 angeordnet, in dem eine Zersetzungstemperatur T_{z} von 400 bis 600 °C herrscht. Dadurch zersetzt sich der Binder, beispielsweise Polyvenylidenfluorid (PVDF). Das Zersetzungsprodukt wird über eine Ableitung 46 abgeleitet und in eine Gaswaschkolonne 48 geführt.

In Materialflussrichtung hinter dem Ofen 44 ist ein Luftstrahlsieb 50 angeordnet. Das Luftstrahlsieb 50 umfasst ein Siebelement 52. Die aus dem Ofen 44 kommenden wärmebehandelten Zellenfragmente werden auf ein Luftstrahlsieb gefördert. Dieses ist dadurch charakterisiert, dass ober- oder unterhalb des feinmaschigen Siebelements (20-200 µm) ein Luftstrom zugeführt wird. Dieser wird unterhalb des Siebes abgezogen. Durch die Luftströmung werden die Elektrodenfragmente aufgewirbelt und dann mechanisch beansprucht. Diese Beanspruchung unterstützt die Separation von Trägerfolie und Beschichtung. Die Aktivmaterial-Partikel werden so im Luftstrom durch die Maschen abzogen und im Folgenden durch einen Zyklon aus dem Luftstrom abgetrennt. Die Folienfraktion (Aluminium und Kupfer) wird durch das Siebelement zurückgehalten und kann als Metallfraktion gewonnen und wieder verwendet werden.

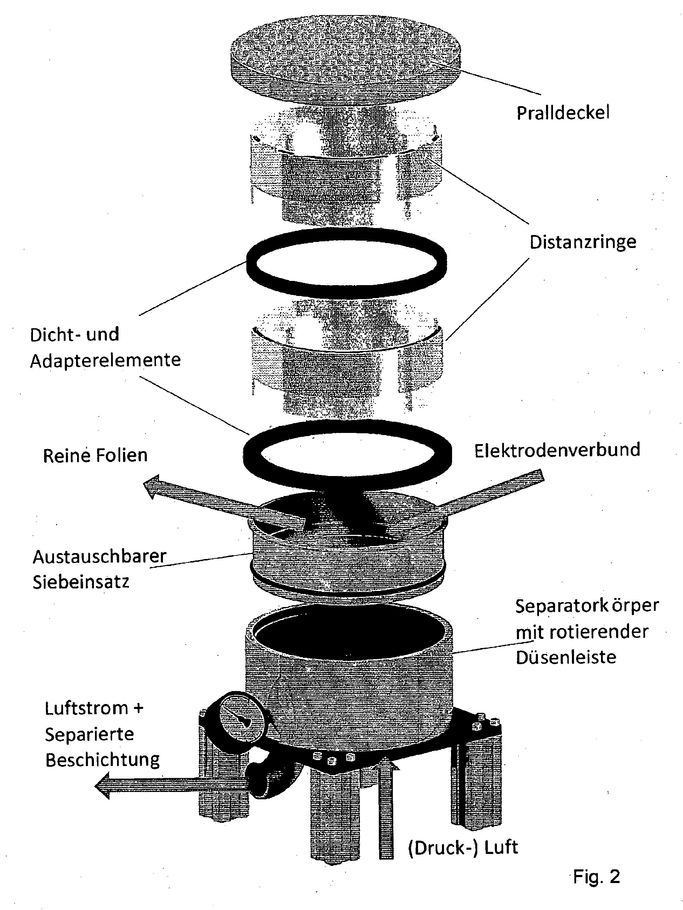

Figur 2 zeigt eine Explosionsansicht eines Prallseparators oder Luftstrahlsiebs. Die zu trennenden wärmebehandelten Zellenfragmente werden auf eine Seite des Siebs zugeführt, von der anderen Seite wird ein sich bewegender Luftstrahl, beispielsweise durch eine sich bewegende Düsenleiste in Richtung auf das Sieb geblasen. Dadurch werden die Zellenfragmente gegen die Prallplatte in Form des Pralldeckels geschleudert und trennen sich dort in den Träger und die Beschichtung.

Auf der Seite des Siebs, von der der Luftstrahl auf das Sieb geblasen wird, befindet sich ein Ansaugstutzen, mittels dem die eingeblasene Luft zusammen mit der Beschichtung abgezogen wird. Die Prallplatte wird durch Distanzringe vom Sieb beabstandet gehalten.

**Bezugszeichenliste**

| | | | |
|---|---|---|---|
| 10 | Aktivmaterial-Separationsanlage | 40 | Ableitung |
| 12 | Zellenzerkleinerungsvorrichtung | 42 | Sichter |
| 14 | galvanische Zelle | 44 | Ofen |
| 16 | Gaswaschkolonne | 46 | Ableitung |
| 18 | Umwälzpumpe | 48 | Gaswaschkolonne |
| | | | |
| 20 | Kondensator | 50 | Luftstrahlsieb |
| 22 | Inertgastank | 52 | Siebelement |
| 24 | Elektrolytabzug | 54 | Partikel |
| 26 | Rührreaktor | 56 | Ableitung |
| 28 | Vortrockner | 58 | Zyklon |
| | | | |
| 30 | Leitung | Tₜ | Trocken-Temperatur |
| 32 | Umwälzpumpe | T_{z} | Zersetzungs-Temperatur |
| 34 | Kondensator | | |
| 36 | Leitung | | |
| 38 | Abscheider | | |

## Patentansprüche

1. Verfahren zum Wiedergewinnen von Aktivmaterial einer galvanischen Zelle, die ein Aktivmaterial, einen Träger für das Aktivmaterial und einen Binder zum Verbinden des Aktivmaterials und des Trägers umfasst,
mit den Schritten:
(a) Zerkleinern der Zellen, insbesondere unter Inertgas oder im Vakuum, so dass zumindest auch feste Zellenfragmente entstehen,
(b) Erwärmen der festen Zellenfragmente auf eine Zersetzungs-Temperatur (T_{z}), die so hoch gewählt ist, dass der Binder sich zersetzt und/oder verdampft, vorzugsweise unter Intergas oder im Vakuum so dass wärmebehandelte Zellenfragmente entstehen, und
(c) Klassieren der wärmebehandelten Zellenfragmente,
**dadurch gekennzeichnet, dass**
(d) das Klassieren ein Luftstrahlsieben umfasst,
(e) wobei das Luftstrahlsieben so durchgeführt wird, dass Aktivmaterial von dem Träger getrennt wird.

2. Verfahren nach Anspruch 1, **dadurch gekennzeichnet, dass**
- galvanische Zellen (14) verwendet werden, deren Aktivmaterial aus Partikeln gebildet ist,
- die Partikel eine Partikeldurchmesserverteilung haben, wobei die Partikeldurchmesserverteilung einen 90%-Durchmesser besitzt, der demjenigen Durchmesser entspricht, der größer ist als der Durchmesser von 90% aller Partikel und der kleiner ist als der Durchmesser von 10% aller Partikel, und
- das Luftstrahlsieben mit einem Sieb erfolgt, dessen Maschenweite maximal dem 200-fachen des 90%-Durchmessers entspricht.

3. Verfahren nach einem der vorstehenden Ansprüche, **dadurch gekennzeichnet, dass** die Maschenweite des Siebs höchstens 200 µm beträgt.

4. Verfahren nach einem der vorstehenden Ansprüche, **dadurch gekennzeichnet, dass** die galvanischen Zellen (14) je zumindest eine Anode und zumindest eine Kathode umfassen und die Anoden und Kathoden gemeinsam erwärmt werden und die entstehenden wärmebehandelten Zellenfragmente in einem gemeinsamen Luftstrahlsieb (50) klassiert werden.

5. Verfahren nach einem der vorstehenden Ansprüche, **gekennzeichnet durch** den Schritt:
(a2) vor dem Erwärmen der Zellenfragmente auf die eine Zersetzungs-Temperatur (T_{z})
- Trocknen der Zellenfragmente bei einer Trocknungs-Temperatur (Tₜ), so dass trockene Zellenfragmente und Trocknungsdämpfe entstehen und
- Kondensieren zumindest eines Teils der Trocknungsdämpfe zum Zweck der Rückgewinnung der Elektrolytlösemittel.

6. Verfahren nach einem der vorstehenden Ansprüche, **dadurch gekennzeichnet, dass** das Erwärmen der Zellenfragmente auf die Zersetzungs-Temperatur (T_{z}) unter Inertgas oder in einem Vakuum durchgeführt wird.

7. Verfahren nach einem der vorstehenden Ansprüche, **gekennzeichnet durch** die Schritte:
(a3) Behandeln der trockenen Zellenfragmente mittels Magnetabscheidung, so dass eisenfreie Zellenfragmente entstehen, und
(a4) Sichten der eisenfreien Zellenfragmente.

8. Verfahren nach einem der vorstehenden Ansprüche, **dadurch gekennzeichnet, dass** die galvanischen Zellen (14) einen Elektrolyten aufweisen und/oder beim Zerkleinern der Zellen unter Inertgas zumindest auch der Elektrolyt abgezogen wird.

9. Verfahren nach einem der vorstehenden Ansprüche, **dadurch gekennzeichnet, dass** das Zerkleinern der Zellen so durchgeführt wird, dass der Median der längsten Durchmesser der resultierenden Folienfragmente 200 µm nicht unterschreitet.

10. Aktivmaterial-Separationsanlage, insbesondere Aktivmetall-Separationsanlage (10), die ausgebildet ist zum Wiedergewinnen von Aktivmaterial, insbesondere Lithium, einer galvanischen Zelle (14), die ein Aktivmaterial, einen Träger für das Aktivmaterial, einen Binder zum Verbinden des Aktivmaterials und des Trägers und einen Elektrolyten umfasst, mit
(a) einer Zellenzerkleinerungsvorrichtung (12) zum Zerkleinern der Zellen, wobei die Zellenzer-kleinerungsvorrichtung gasdicht ist und eine Inertgaszuführvorrichtung umfasst, so dass die Zellen unter Inertgas zu Zellenfragmenten zerkleinerbar sind, und
(b) einem Ofen (44), der zumindest mittelbar mit der Zellenzerkleinerungsvorrichtung (12) verbunden und eingerichtet ist zum Erwärmen der Zellenfragmente auf eine Zersetzungs-Temperatur (T_{z}), die so hoch gewählt ist, dass der Binder sich zersetzt,
**gekennzeichnet durch**
(c) eine Luftstrahlsiebvorrichtung, die zumindest mittelbar mit dem Ofen (44) verbunden und eingerichtet ist zum Klassieren von Aktivmaterial und Träger, indem das Luftstrahlsieben so durchgeführt wird, dass das Aktivmaterial von dem Träger getrennt wird.

11. Aktivmaterial-Separationsanlage nach Anspruch 10, **dadurch gekennzeichnet, dass** die Luftstrahlsiebvorrichtung ein Sieb, eine Prallplatte und eine Düsenleiste aufweist, wobei das Sieb bezüglich eines Luftstroms durch die Luftstrahlsiebvorrichtung zwischen Düsenleiste und Prallplatte angeordnet ist.

12. Aktivmaterial-Separationsanlage nach Anspruch 11, **dadurch gekennzeichnet, dass** die Prallplatte einen Abstand von mindestens 30 Millimetern, insbesondere mindestens 40 Millimetern, vom Sieb hat.

13. Aktivmaterial-Separationsanlage nach Anspruch 11 oder 12, **dadurch gekennzeichnet, dass** die Prallplatte einen Abstand von höchstens 250 Millimetern, insbesondere mindestens 200 Millimetern, vom Sieb hat.

## Claims

1. A method for reclaiming active material from a galvanic cell that comprises an active material, a carrier for the active material and a binder for binding the active material and the carrier,
said method comprising the steps:
(a) comminuting the cells, in particular under inert gas or in a vacuum, such that solid cell fragments are at least also produced,
(b) heating the solid cell fragments to a decomposition temperature (Tz) selected to be high enough that the binder decomposes and/or evaporates, preferably under inert gas or in a vacuum, so as to produce thermally treated cell fragments, and
(c) classification of these thermally treated cell fragments, **characterised by** the fact that
(d) the classification comprises an air-jet sieving process,
(e) the air-jet sieving process is implemented such that active material is separated from the carrier.

2. The method according to claim 1, **characterised by** the fact that
- galvanic cells (14) are used whose active material is formed from particles,
- the particles have a particle size distribution, the particle size distribution having a 90% diameter, which corresponds to the diameter which is greater than the diameter of 90% of all the particles and smaller than the diameter of 10% of all the particles, and
- the air-jet sieving process is conducted using a sieve, the mesh size corresponding to a maximum of 200 times the size of the 90% diameter.

3. The method according to one of the above claims, **characterised by** the fact that the sieve has a maximum mesh size of 200 µm.

4. The method according to one of the above claims, **characterised by** the fact that the galvanic cells (14) each comprise at least one anode and at least one cathode and the anodes and cathodes are heated together and the resulting thermally treated cell fragments are classified in a common air-jet sieve (50).

5. The method according to one of the above claims, **characterised by** the step:
(a2) prior to heating the cell fragments to the decomposition temperature (T_{z})
- drying the cell fragments at a drying temperature (Tₜ), thereby producing dry cell fragments and drying vapours and
- condensing at least one part of the drying vapours for the purpose of recovering the electrolyte solvent.

6. The method according to one of the above claims, **characterised by** the fact that the heating of the cell fragments to the decomposition temperature (T_{z}) is conducted under inert gas or in a vacuum.

7. The method according to one of the above claims, **characterised by** the steps;
(a3) treating the dry cell fragments by means of magnetic separation, thereby producing ironless cell fragments, and
(a4) sifting the ironless cell fragments.

8. The method according to one of the above claims, **characterised by** the fact that the galvanic cells (14) comprise an electrolyte and/or the electrolyte is at least also removed during the comminution of the cells.

9. The method according to one of the above claims, **characterised by** the fact that the comminution of the cells is conducted such that the median of the longest diameter of the resulting foil fragments is no lower than 200 µm.

10. An active material separation installation, particularly an active metal separation installation (10) which is designed to reclaim active material, in particular lithium, from a galvanic cell (14) which comprises an active material, a carrier for the active material, a binder for binding the active material and the carrier, and an electrolyte, said installation comprising
(a) a cell comminution unit (12) for comminuting the cells, the cell comminution unit being gas-tight and comprising an inert gas supply unit so that the cells can be comminuted to cell fragments under inert gas, and
(b) an oven (44), which is at least indirectly connected to the cell comminution unit (12) and is designed to heat the cell fragments to a decomposition temperature (Tz) selected to be high enough that the binder decomposes,
**characterised by**
(c) an air-jet sieving unit that is at least indirectly connected to the oven (44) and is designed to classify the active material and the carrier by carrying out the air-jet sieving process such that the active material is separated from the carrier.

11. An active material separation installation according to claim 10, **characterised by** the fact that the air-jet sieving unit comprises a sieve, a baffle and a nozzle bar, the sieve being arranged between the nozzle bar and the baffle relative to an air stream flowing through the air-jet sieving unit.

12. The active material separation installation according to claim 11, **characterised by** the fact that the baffle is positioned at least 30 mm, in particular at least 40 mm, away from the sieve.

13. The active material separation installation according to claim 11 or 12, **characterised by** the fact that the baffle is positioned at a maximum distance of 250 mm, in particular at least 200 mm, away from the sieve.

## Revendications

1. Procédé pour la récupération de matières actives d'une cellule galvanique qui inclut une matière active, un support pour la matière active et un liant pour lier la matière active et le support,
comprenant les étapes consistant à :
(a) broyer les cellules, en particulier sous gaz inerte ou sous vide, de sorte qu'il apparaît au moins également des fragments de cellules solides,
(b) chauffer les fragments de cellules solides jusqu'à une température de décomposition (Tz), qui est choisie aussi élevée que le liant se décompose et/ou s'évapore, de préférence sous gaz inerte ou sous vide, de sorte qu'il apparaît des fragments de cellules traités à chaud, et
(c) classifier les fragments de cellules traités à chaud,
**caractérisé en ce que**
(d) la classification inclut un tamisage par jet d'air,
(e) dans lequel le tamisage par jet d'air est exécuté de telle façon que la matière active est séparée du support.

2. Procédé selon la revendication 1, **caractérisé en ce que**
- on utilise des cellules galvaniques (14) dont la matière active est formée de particules,
- les particules présentent une répartition de diamètres de particules, telle que la répartition de diamètre de particules possède un diamètre à 90 % qui correspond au diamètre qui est plus grand que le diamètre de 90 % de toutes les particules et qui est plus petit que le diamètre de 10 % de toutes les particules, et
- le tamisage par jet d'air est effectué avec un tamis dont la taille des mailles correspond au maximum à 200 fois le diamètre à 90 %.

3. Procédé selon l'une des revendications précédentes, **caractérisé en ce que** la taille des mailles du tamis s'élève au maximum à 200 µm.

4. Procédé selon l'une des revendications précédentes, **caractérisé en ce que** les cellules galvaniques (14) incluent chacune au moins une anode et au moins une cathode, et les anodes et les cathodes sont chauffées conjointement, et les fragments de cellules traités à chaud qui apparaissent sont classifiés dans un tamis à jet d'air commun (50).

5. Procédé selon l'une des revendications précédentes, **caractérisé par** l'étape consistant à :
(a2), avant de chauffer les fragments de cellules à une température de décomposition (Tz) :
- sécher les fragments de cellules à une température de séchage (Tt) de sorte qu'il apparaît des fragments de cellules séchés et des vapeurs de séchage, et
- condenser au moins une partie des vapeurs de séchage dans le but de récupérer le solvant électrolyte.

6. Procédé selon l'une des revendications précédentes, **caractérisé en ce que** le chauffage des fragments de cellules à la température de décomposition (Tz) est exécuté sous gaz inerte ou sous vide.

7. Procédé selon l'une des revendications précédentes, **caractérisé par** les étapes consistant à :
(a3) traiter les fragments de cellules séchés au moyen d'une séparation magnétique, de sorte qu'il apparaît des fragments de cellules dépourvus de fer, et
(a4) trier les fragments de cellules dépourvus de fer.

8. Procédé selon l'une des revendications précédentes, **caractérisé en ce que** les cellules galvaniques (14) comprennent un électrolyte, et/ou **en ce que** l'on soutire au moins également l'électrolyte lors du broyage des cellules sous gaz inerte.

9. Procédé selon l'une des revendications précédentes, **caractérisé en ce que** le broyage des cellules est exécuté de telle façon que la médiane du plus long diamètre des fragments en feuille résultant ne passe pas au-dessous de 200 µm.

10. Installation de séparation de matières actives, en particulier installation de séparation de métal actif (10), qui est réalisée pour récupérer une matière active, en particulier du lithium, d'une cellule galvanique (14) qui comprend une matière active, un support pour la matière active, un liant pour lier la matière active et le support, et un électrolyte, comprenant
(a) un dispositif de broyage de cellules (12) pour broyer les cellules, ledit dispositif de broyage de cellules étant étanche aux gaz et incluant un dispositif d'alimentation en gaz inerte, de sorte que les cellules sont susceptibles d'être broyées sous gaz inerte pour donner des fragments de cellules, et
(b) un four (44), qui est relié au moins indirectement avec le dispositif de broyage de cellules (12) et qui est conçu pour chauffer les fragments de cellules à une température de décomposition (Tz) qui est choisie aussi élevée que le liant se décompose,
**caractérisée par**
(c) un dispositif de tamisage à jet d'air, qui est relié au moins indirectement avec le four et qui est conçu pour classifier la matière active et le support, du fait que le tamisage à jet d'air est exécuté de telle façon que la matière active est séparée du support.

11. Installation de séparation de matières actives selon la revendication 10, **caractérisée en ce que** le dispositif de tamisage à jet d'air comprend un tamis, une plaque à impact, et une barrette à buses, dans laquelle le tamis est agencé, par référence à un courant d'air à travers le dispositif de tamisage à jet d'air, entre la barrette à buses et la plaque à impact.

12. Installation de séparation de matières actives selon la revendication 11, **caractérisée en ce que** la plaque à impact présente par rapport au tamis une distance d'au moins 30 mm, en particulier d'au moins 40 mm.

13. Installation de séparation de matières actives selon la revendication 11 ou 12, **caractérisée en ce que** la plaque à impact présente par rapport au tamis une distance au maximum de 250 mm, en particulier au moins 200 mm.
